Europäisches Patentamt

European Patent Office

Office européen des brevets

(11) Veröffentlichungsnummer: **0 335 073**
**A1**

## (12) EUROPÄISCHE PATENTANMELDUNG

(21) Anmeldenummer: 89101240.3

(51) Int. Cl.4: **B01D 53/36 , B01J 35/06**

(22) Anmeldetag: 25.01.89

(30) Priorität: 30.03.88 DE 3810761

(43) Veröffentlichungstag der Anmeldung:
04.10.89 Patentblatt 89/40

(84) Benannte Vertragsstaaten:
AT BE CH DE ES FR GB GR IT LI LU NL SE

(71) Anmelder: DIDIER-WERKE AG
Lessingstrasse 16-18
D-6200 Wiesbaden(DE)

Anmelder: DIDIER ENGINEERING GmbH
Alfredstrasse 28 Postfach 10 09 45
D-4300 Essen 1(DE)

(72) Erfinder: Kainer, Hartmut, Dr.
Am Guldenplan 2g
D-6200 Wiesbaden 12(DE)
Erfinder: Vedder, Bernhard
Unterlindau 18
D-6000 Frankfurt/M. 1(DE)
Erfinder: Grimm, Daniel
Reitallee 18
D-6208 Bad Schwalbach(DE)
Erfinder: Schnelle, Wilfried, Dr.
Gabelbornstr. 14
D-6200 Wiesbaden(DE)
Erfinder: Kleinevoss, Albert, Dr.
Emser Str. 26
D-4310 Höhr-Grenzhausen(DE)
Erfinder: Bühler, Hans-Eugen, Prof.Dr.
Kastanienweg 3c
D-6240 Königstein 3(DE)
Erfinder: Merkel, Klaus
Schönscheidtstr. 8
D-4300 Essen 13(DE)
Erfinder: Flockenhaus, Claus, Prof.Dr.
Tersteegenweg 16
D-4300 Essen 1(DE)
Erfinder: Laue, Karl-Heinrich
Bergische Str. 41
D-4320 Hattingen 16(DE)
Erfinder: Galow, Manfred
Vosseler Weg 2
D-4300 Essen 12(DE)

(74) Vertreter: Brückner, Raimund, Dipl.-Ing.
c/o Didier-Werke AG Lessingstrasse 16-18
D-6200 Wiesbaden(DE)

(54) Verfahren zur Herstellung von Katalysatoren für die Verminderung von Stickoxiden und nach dem Verfahren hergestellte Katalysatoren.

(57) Die Erfindung bezieht sich auf ein Verfahren zur Herstellung von Katalysatoren für die Verminderung von Stickoxiden aus Abgasen und chemische Luftreinigungsverfahren, bei welchem ein aus Eisenerzen und gegebenenfalls Chromerzen gebildetes, katalytisch aktives Material auf einem metallisch perforierten Träger in Form eines Netzes, Streckmetalls oder Lochbleches aufgetragen und hieran durch Trocknen und/oder Tempern und/oder Brennen mechanisch fest gebunden wird, wobei der metallische Träger durch das Inkontaktbringen mit einer Säure geätzt wird sowie auch nach einem solchen Verfahren hergestellte Katalysatoren.

Das erfindungsgemäße Verfahren ist dadurch gekennzeichnet, daß der metallisch perforierte Träger zwischen zwei Lagen des aktiven Materials eingelegt wird und der Verbund anschließend mit einem Preßdruck von wenigstens 5 N/mm² gepreßt wird.

Die nach dem erfindungsgemäßen Verfahren hergestellten Katalysatoren weisen eine wesentlich bessere Aktivität als vorbekannte, vergleichbar aufgebaute Verbundkatalysatoren auf, wobei insbesondere ihre mechanische Stabilität bzw. mechanische Beanspruchbarkeit wesentlich höher liegt.

K-Wert
(m/h)

Beispiel 1 (erfindungsgemäß)

Vergleich (DE 35 26 383 C1)

## Verfahren zur Herstellung von Katalysatoren für die Verminderung von Stickoxiden und nach dem Verfahren hergestellte Katalysatoren

Die Erfindung bezieht sich auf ein Verfahren zur Herstellung von Katalysatoren für die Verminderung von Stickoxiden aus Abgasen und chemische Luftreinigungsverfahren, bei welchem ein aus Eisenerzen und gegebenenfalls Chromerzen gebildetes, katalytisch aktives Material auf einem metallisch perforierten Träger in Form eines Netzes, Streckmetalls oder Lochbleches aufgetragen und hieran durch Trocknen und/oder Tempern und/oder Brennen mechanisch fest gebunden wird, wobei der metallische Träger durch das Inkontaktbringen mit einer Säure geätzt wird sowie auch nach einem solchen Verfahren hergestellte Katalysatoren.

Aus der DE 35 26 383 C1 ist bereits ein Verfahren der zuvor beschriebenen Art bekannt, bei welchem ein sogenannter Verbundkatalysator erhalten wird, d.h. ein Katalysator, dessen mechanische Struktur durch Einbau eines metallischen perforierten Trägers wesentlich verbessert wird. Gemäß dieser vorbekannten Arbeitsweise wird der metallische Träger mit Säure geätzt, was dadurch geschieht, daß entweder das Inkontaktbringen des metallischen Trägers mit einem Gemisch aus katalytisch aktivem Material und Säure erfolgt oder der metallische Träger durch vorheriges Eintauchen in Säure geätzt wird. Als ätzende Säure wird bei dieser vorbekannten Verfahrensweise Schwefelsäure eingesetzt.

Als katalytisch aktives Material können bei dieser vorbekannten Verfahrensweise natürliche Rohstoffe wie Eisenerz, Chromerz oder Zeolith und/oder synthetische Stoffe und/oder industrielle Abfallstoffe wie Schlacke, Schlämme oder Zunder verwendet werden, ferner ist es möglich, diesen katalytisch aktiven Materialien noch Aktivatoren, z.B. Elemente bzw. Oxide der 7. und 8. Hauptgruppe des Periodensystems beizumischen.

Aufgabe der vorliegenden Erfindung ist die Bereitstellung eines Katalysators der zuvor beschriebenen Art, welcher einerseits eine bessere katalytische Aktivität und andererseits eine bessere mechanische Festigkeit aufweist, wobei insbesondere das Abplatzen des katalytisch aktiven Materials von dem metallischen Träger möglichst vermieden wird.

Es wurden nun überraschenderweise gefunden, daß es möglich ist, sowohl katalytisch stärker aktive Katalysatoren der genannten Art aus denselben Ausgangsmaterialien herzustellen als auch eine wesentlich bessere mechanische Bindung der katalytisch aktiven Materialien an den metallischen perforierten Trägern zu erzielen, wenn eine bestimmte Verfahrensweise zur Erzeugung der Katalysatoren angewandt wird.

Zur Lösung der zuvorgenannten Aufgabe dient das Verfahren der angegebenen Art, welches dadurch gekennzeichnet ist, daß der metallisch perforierte Träger zwischen zwei Lagen des aktiven Materials einlegt wird und der Verbund anschließend mit einem Preßdruck von wenigstens 5 $N/mm^2$ gepreßt wird, vorteilhafterweise mit einem Preßdruck von 2 bis 5 $N/mm^2$.

Gemäß einer bevorzugten Ausführungsform liegt der Preßdruck im Bereich von 30 bis 80 $N/mm^2$ und besonders bevorzugt im Bereich von 40 bis 60 $N/mm^2$, wobei mechanisch besonders stabile Katalysatoren erhalten werden können.

Gemäß einer weiteren bevorzugten Ausführungsform wird der metallische Träger durch vorherige Säurebehandlung geätzt. Hierdurch kann eine noch bessere Bindung des katalytisch aktiven Materials an dem Träger erreicht werden.

Gemäß einer weiteren bevorzugten Ausführungsform wird jedoch der fertig gepreßte Verbundkörper aus katalytisch aktivem Material und metallischem perforiertem Träger erst nach seiner Erzeugung zur Ätzung des metallischen Trägers und gegebenenfalls zur Umwandlung eines Teiles der in dem katalytisch aktiven Material vorliegenden Oxide in die entsprechenden Salze mit Säure behandelt.

Gemäß einer weiteren bevorzugten Ausführungsform wird das katalytisch aktive Material zusammen mit einem hitzehärtbaren Kunststoffharz verwendet und nach dem Pressen des Verbundkörpers dieser einer Wärmebehandlung zur Aushärtung des Kunststoffharzes unterworfen.

Besonders bevorzugt wird als Kunststoffharz ein Phenol-Novolakharz mit einem geeigneten Härter, vorzugsweise Hexamethylentetramin verwendet.

Gemäß einer weiteren bevorzugten Ausführungsform wird ein solcher mit einem hitzehärtbaren Kunststoffharz hergestellter Verbundkörper nach dem Aushärten des hitzehärtbaren Harzes zur Ätzung des metallischen Trägers mit der Säure behandelt.

Bei dem erfindungsgemäßen Verfahren werden als Hauptbestandteile des Katalysators Eisenerze bzw. Chromerze verwendet, d.h. Erze, welche Eisenoxid oder Mischungen aus Eisenoxid und Chromoxid, gegebenenfalls auch von Manganoxid sowie weiteren Oxiden enthalten. Vorzugsweise handelt es sich um Erze mit hohen Gehalten an $Fe_2O_3$ bzw. $Fe_3O_4$ oder $Cr_2O_3$. Diese Erze werden üblicherweise in geeignet zerkleinerter Form eingesetzt, z.B. mit Korngrößen unterhalb von 1 bis 2 mm.

Gegebenenfalls können den Erzen aktivierende Zusätze zudotiert werden, wobei es sich um an sich bekannte Dotierungen handeln kann, die entweder in Form der Elemente, der Oxide oder anderer geeigneter Salze eingesetzt werden. Beispiele für solche dotierenden Elemente sind Vanadium, Kupfer, Kobalt, Urat, Wolfram, Nickel, Molybdän, Mangan, Zinn, Zink, Beryllium, Bor, Yttrium, Niob, Antimon, Wismuth, Silber sowie Elemente der seltenen Erden in Form von Oxiden oder Hydroxiden. Bei den Katalysatoren können gemäß der Erfindung ebenfalls Oxide oder Hydroxide des Magnesiums, Aluminiums und/oder Siliziums entweder in den Ausgangsmaterialien als Verunreinigungen vorliegen oder auch absichtlich zugesetzt werden.

Zur Erzeugung der erfindungsgemäßen Katalysatoren können anorganische und/oder organische Bindemittel verwendet werden. Beispiele für solche anorganischen Bindemittel sind Tone, insbesondere Bindetone, Kaoline, Al-haltige Verbindungen wie Aluminiumhydroxid und Aluminiumhydroxychlorid, magnesium- oder kalziumhaltige Verbindungen und gegebenenfalls feinkörniges oder kolloidales $SiO_2$ oder Gemische dieser anorganischen Bindemittel.

Als organische Bindemittel können zur Herstellung der erfindungsgemäßen Katalysatoren organische Bindemittel verwendet werden, die auf dem Feuerfestgebiet an sich bekannt sind. Beispiele für solche organischen Bindemittel sind Celluloseether, Schmelzkleber, Sinterpulver, Phenolharze, insbesondere Phenol-Novolake, wobei hier geeignete Härter, z.B. Hexamethylentetramin verwendet werden können, sowie modifizierte Furanharze, z.B. Furfurylalkoholharze, die, ebenfalls mit einem geeigneten Härter, z.B. Hexamethylentetramin, eingesetzt werden.

Die Menge an anorganischen Bindemitteln beträgt üblicherweise 0,05 bis 5 Gew.-Teile auf 100 Gew.-Teilen der katalytisch aktiven Materialien, die Menge eines organischen Bindemittels beträgt üblicherweise 0,1 bis 4,0 Gew.-Teile auf 100 Gew.-Teile des katalytisch aktiven Materials.

Als Säure zum Ätzen des metallischen perforierten Trägers in Form eines Netzes, Streckmetalls oder Lochblechs wird vorzugsweise Schwefelsäure verwendet, es können jedoch auch Gemische von Schwefelsäure und Phosphorsäure Verwendung finden.

Der metallische perforierte Träger besteht vorteilhafterweise aus Eisen bzw. Stahl, es können jedoch auch Edelstähle Verwendung finden. Der metallische Träger muß jedoch einen Mindestgehalt von 50 Gew.-% Eisen aufweisen. In vorteilhafter Weise wird ein Gewebe oder Netz aus Eisendraht verwendet, wobei die Drahtstärke zwischen 0,1 und 1,0 mm, vorteilhafterweise zwischen 0,3 und 0,8 mm liegt und die Maschenweite wenigstens 0,5 mm beträgt und vorteilhafterweise zwischen 1,0 und 4,0 mm liegt.

Bei dem erfindungsgemäßen Verfahren zur Herstellung der Katalysatoren wird zunächst ein Mörtel bzw. eine Stampf-bzw. preßmasse aus dem katalytisch aktiven Material hergestellt, wozu geeignete anorganische oder organische Flüssigkeiten, vorteilhafterweise jedoch Wasser, verwendet wird. Weiterhin kann bei der Herstellung eines solchen Mörtels bzw. einer solchen flüssigkeitshaltigen Stampfmasse des katalytischen Ausgangsmaterials auch bereits eine Säure, vorteilhafterweise Schwefelsäure oder eine Mischung aus Schwefelsäure und Phosphorsäure zum Anmachen des Mörtels bzw. der Stampfmasse zugesetzt werden. Diese feuchte Masse wird dann zunächst zu einer Lage ausgebreitet, auf diese Lage wird der metallische perforierte Träger aufgelegt und eine erneute Lage der feuchten Ausgangsmischung des katalytisch aktiven Materials auf den metallischen perforierten Träger aufgebracht, anschließend wird dieser Verbund mit einem Preßdruck von wenigstens 5 $N/mm^2$ zusammengepreßt, um einen Verbundkörper zu erhalten.

Falls ein anorganisches und/oder organisches Bindemittel, z.B. in Form eines hitzehärtbaren Kunststoffharzes, verwendet wurde, wird zu einer schnelleren Aushärtung der erhaltene, gepreßte Verbundform körper kurzzeitig einer Temperatur oberhalb von 120 °C, vorteilhafterweise zwischen 200 und 280 °C ausgesetzt.

Bei der Ausführungsform des erfindungsgemäßen Verfahrens, bei welchem der metallische Träger durch vorherige Säurebehandlung geätzt wird, wird der metallische Träger in Schwefelsäure, vorteilhafterweise mit einer Konzentration zwischen 50 und 98 %, oder in eine Mischung aus Schwefelsäure und Phosphorsäure eingetaucht oder hiermit besprüht.

Bei der Ausführungsform des erfindungsgemäßen Verfahrens, bei welchem zunächst das katalytisch aktive Material auf den Träger beidseitig aufgebracht und der Preßverbundkörper hergestellt wurde, erfolgt die Säurebehandlung des metallischen Trägers sowie auch des katalytisch aktiven Materials mit der Säure durch Eintauchen oder Besprühen. Eine geeignete Eintauchzeit in eine Schwefelsäure, deren Konzentration vorteilhafterweise zwischen 30 und 60 % liegt, oder in eine Mischung aus Schwefelsäure und Phosphorsäure, erfolgt bei einer Gesamtdicke des gepreßten Verbundkörpers von 2,5 mm während einer Tauchzeit zwischen 5 und 20 Sekunden, wobei der auf diese Weise mit Säure behandelte Verbundformkörper anschließend bei Temperaturen zwischen 150 °C und 250 °C während mehrerer Stunden getrocknet wird.

Gemäß einer weiteren vorteilhaften Ausführungsform wird der gepreßte Verbundformkörper, bei dessen Herstellung die zum Ätzen des metallischen perforierten Trägers benötigte Säure oder Säuremischung entweder durch vorherige Behandlung des perforierten metallischen Trägers, durch gemeinsames Aufbringen in einer Mischung mit dem katalytisch aktiven Material oder durch nachträgliche Behandlung des fertig gepreßten Verbundkörpers geätzt wurde, einer Temperatur unterzogen. Diese erfolgt vorteilhafterweise mit einer Aufheizgeschwindigkeit zwischen 5 und 20 °C/h bis zu einer Temperatur im Bereich von 350 bis 600 °C, vorteilhafterweise 420 bis 480 °C. Diese Temperbehandlung erfolgt vorzugsweise in einer Atmosphäre mit einem Sauerstoffgehalt von 2 bis 6 %. Die Temperbehandlung wird während mehrerer Stunden, üblicherweise zwischen 12 und 18 Stunden durchgeführt. Nach dem Abkühlen liegt dann ein katalytisch aktiver Verbundkörper vor, welcher Eisensulfat und gegebenenfalls Chromsulfat, Mg-, Al-sulfat, Ca-Sulfat, Sulfate der beigemischten Oxide, in dem katalytisch aktiven Material enthält.

Die Erfindung wird anhand der folgenden Beispiele näher erläutert.

Beispiel 1

2,76 kg Einsenerz mit einem Gehalt von 95 % $Fe_2O_3$, Rest $SiO_2$, FeO, $Al_2O_3$, einer Rohdichte von 3,6 g/cm³ und einer Gesamtporosität größer als 15 Vol.-% sowie einer Körnung von 0 bis 1 mm und 0,03 kg Chromerz mit einem Gehalt von 50 % $Cr_2O_3$, Rest MgO, $Fe_2O_3$, $SiO_2$ und $Al_2O_3$ mit derselben Körnung wurden homogen in einem Turbulenzmischer mit 0.15 kg Bindeton und 0,04 kg eines pulverförmigen Phenol-Novolakharzes vermischt. In diese Mischung wurden 95 ml Wasser eingearbeitet. In die Form einer hydraulischen Presse wurde eine erste Lage der Preßmasse mit einer Höhe von 2 bis 2,5 mm eingefüllt. Hierauf wurde ein ausgeglühtes Eisendrahtgewebe mit einer Drahtstärke von 0.6 mm und einer Maschenweite von 2.0 mm aufgelegt. Über dieses Eisendrahtgewebe wurde eine zweite Lage der Preßmasse mit einer Füllhöhe von 2 bis 2,5 mm eingefüllt. Anschließend wurde die Gesamtfüllung in der Presse mit einem Preßdruck von 40 N/mm² zu einem Formkörper verpreßt. Die Abmessungen des Formkörpers betrugen 150 x 150 x 2,5 mm. Zur beschleunigten Aushärtung des Bindemittels wurden die Verbundkörper kurzzeitig einer Temperatur von 250 °C in einem Ofen ausgesetzt. Der Verbundkörper wurde sodann in eine 45 %ige Schwefelsäure während 10 Sekunden eingetaucht und anschließend 2 Stunden bei 200 °C getrocknet. Anschließend wurde mit einer Aufheizgeschwindigkeit von 10 °C/h in einer Atmosphäre mit 2 % Sauerstoff bis zu einer Temperatur von 450 °C getempert, wobei diese Temperatur von 450 °C während 5 h gehalten wurde.

Beispiel 2

Es wurde dieselbe Ausgangsmischung wie in Beispiel 1 verwendet, wobei diese Ausgangsmischung jedoch nur mit dem Bindeton, jedoch ohne pulverförmiges Phenol-Novolakharz vermischt wird und anstelle des Wassers 95 ml 60 %ige Schwefelsäure zugesetzt wurden. Die Weiterverarbeitung zu dem gepreßten Verbundkörper erfolgte entsprechend der Arbeitsweise von Beispiel 1. Dieser Formkörper wurde nach einer Temperaturbehandlung bei 200 °C ohne Tauchbehandlung in Schwefelsäure weiter auf 400 °C mit einer Aufheizgeschwindigkeit von 10 °C/h zur Temperung während 5 Stunden bei 450 °C aufgeheizt.

Vergleichsversuch

Es wurde die Arbeitsweise von Beispiel 1 der DE 35 26 383 wiederholt, d.h. ein Verbundkörper aus demselben Eisenerz und Chromerz sowie Bindeton verwendet. Zu dieser Mischung wurde 22 Gew.-% Schwefelsäure 50 %ig zugesetzt, um einen Schlicker herzustellen. Dieser Schlicker wurde in ein geeignetes Tauchgefäß gegeben und hierin das in Beispiel 1 verwendete ausgeglühte Eisendrahtgewebe dreimal mit Zwischentrocknung bei 200 °C eingetaucht. Anschließend erfolgte eine kontinuierliche Temperung des erhaltenen Formkörpers bei 450 °C.

An dem in Beispiel 1 hergestellten gepreßten Verbundkörper und dem gemäß Vergleichsversuch hergestellten Verbundkörper wurden die katalytische Aktivität und die mechanische Festigkeit bestimmt.

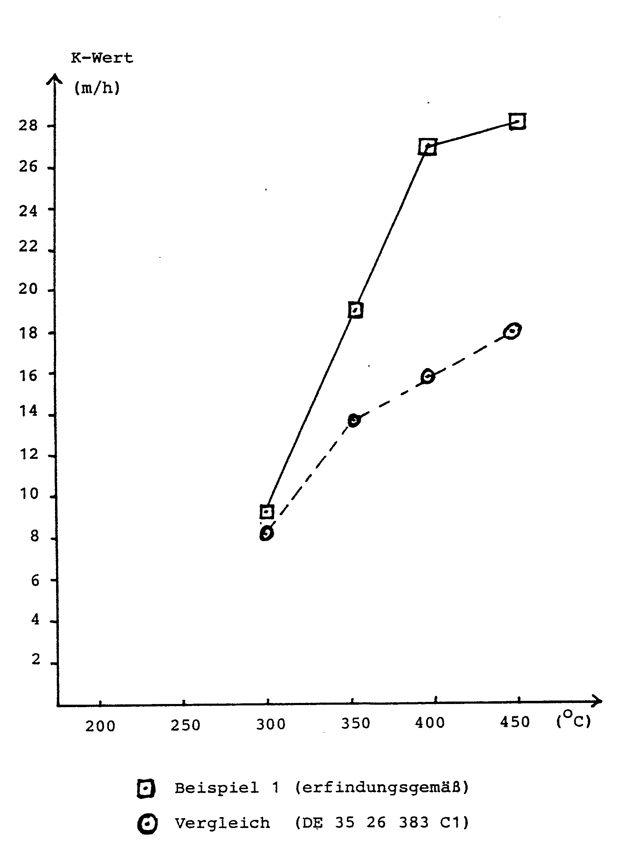

Der Verlauf der katalytischen Aktität ist in dem Diagramm der Zeichnung dargestellt.

Die Messungen der katalytischen Aktivität wurden bei verschiedenen Temperaturen bei einem AV-Wert von 6,8 m³/m².h und einem α-Wert (Mol $NH_3$/Mol No) von 1,05 durchgeführt.

Aus dem Diagramm ist ersichtlich, daß der erfindungsgemäß hergestellte Katalysator eine wesentlich dessere katalytische Aktivität als der Katalysator des Vergleichversuchs besitzt.

Weiterhin wurden noch für eine Temperatur von 400 °C bei einem AV-Wert von 13,6 m³/m².h Messungen durchgeführt, wobei die K-Werte für den Katalysator des Beispiels 1 gemäß der Erfindung bei 29 m/h und für den Katalysator des Vergleichsversuchs bei 21 m/h lagen.

Weiterhin wurden noch der geringste Biegeradius der gemäß Beispiel 1 bzw. Vergleichsversuch hergestellten Katalysatoren bestimmt, bei welchem ein erstes Abplatzen der Bestandteile aus katalytisch aktivem Material auf dem Drahtgewebe auftrat. Diese Messung wurde jweils an Katalysatorplatten mit den Maßen 150 x 150 x 2,5 mm durchgeführt.

Hierbei betrug der kleinstmögliche Biegeradius des Katalysators gemäß Vergleichsversuch 180 mm, während der kleinstmögliche Biegeradius des erfindungsgemäßen Katalysators gemäß Beispiel 1 bei 100 mm lag.

Es folgen weitere ergänzende Beispiele:

Beispiel 3

Verfahren entsprechend Beispiel 1, jedoch wurde das Eisendrahtgewebe vor dem Einlegen in die Preßform 1 sek. in 45 %ige Schwefelsäure getaucht.

Beispiel 4

Verfahren entsprechend Beispiel 1, jedoch wurden der Trockenmischung anstelle des Wassers 95 ml 25 %ige Schwefelsäure zugesetzt.

Die weitere Verarbeitung erfolgte wie im Beispiel 1, d.h. mit einer Tränkung in 45 %ige Schwefelsäure.

Beispiel 5

Analog Beispiel 4, jedoch erfolgt die Tränkung in 70 ml 45 %ige Schwefelsäure und 25 ml 10 %ige Phosphorsäure.

Beispiel 6

Verfahren wie Beispiel 1, jedoch wurde das Eisendrahtgewebe vor dem Einlegen in die Preßform 1 sek. in 20 %ige Phosphorsäure getaucht.

Ein weiterer Vorteil des erfindungsgemäßen Verfahrens liegt darin, daß es möglich ist, die als katalytisch aktives Material dienenden Ausgangserze bzw. Erzgemische mit viel größeren Maximalkorngrößen als bei dem Verfahren der DE 35 26 383 C1 einzusetzen, da bei diesem vorbekannten Verfahren entweder ein Schlicker der Erze angewandt wird, was sehr feinkörniges Erz bedingt, oder ein vorher mit Säure behandeltes Drahtgewebe mit dem Erz, das eine Feinheit unterhalb 0,1 mm und vorzugsweise von 10 bis 50 μm besitzt, in feuchtem Zustand gepudert wird. Demgegenüber kann bei dem erfindungsgemäßen Verfahren das Erz mit Korngrößen bis hinauf zu 1 oder 2 mm eingesetzt werden, wobei diese Maximalkorngröße letztlich nur von der Dicke des letztlich erhaltenen gepreßten Verbundkörpers abhängig ist. Es können daher bis zu 60 % des eingesetzten Erzes mit einer Korngröße oberhalb von 0,5 mm vorliegen.

**Ansprüche**

1. Verfahren zur Herstellung von Katalysatoren für die Verminderung von Stickoxiden aus Abgasen und chemische Luftreinigungsverfahren, bei welchem ein aus Eisenerzen und gegebenenfalls Chromerzen gebildetes, katalytisch aktives Material auf einem metallisch perforierten Träger in Form eines Netzes, Streckmetalls oder Lochbleches aufgetragen und hieran durch Trocknen und/oder Tempern und/oder Brennen mechanisch fest gebunden wird, wobei der metallische Träger durch das Inkontaktbringen mit einer Säure geätzt wird, dadurch gekennzeichnet, daß der metallisch perforierte Träger zwischen zwei Lagen des aktiven Materials einlegt wird und der Verbund anschließend mit einem Preßdruck von wenigstens 0,5 N/mm$^2$ gepreßt wird.

2. Verfahren nach Anspruch 1, dadurch gekennzeichnet, daß ein Preßdruck von 20 bis 80 N/mm$^2$ angewandt wird.

3. Verfahren nach Anspruch 2, dadurch gekennzeichnet, daß ein Preßdruck von 30 bis 60 N/mm$^2$ angewandt wird.

4. Verfahren nach einem der vorhergehenden Ansprüche, dadurch gekennzeichnet, daß der metallische Träger durch vorherige Säurebehandlung geätzt wird.

5. Verfahren nach einem der Ansprüche 1 bis 3, dadurch gekennzeichnet, daß der fertig gepreßte Verbundkörper mit Säure zur Ätzung des metallischen Trägers und des katalytisch aktiven Materials behandelt wird.

6. Verfahren nach einem der vorhergehenden Ansprüche, dadurch gekennzeichnet, daß das katalytisch aktive Material zusammen mit einem pulverförmigen, hitzehärtbaren Kunststoffharz eingesetzt wird.

7. Verfahren nach Anspruch 6, dadurch gekennzeichnet, daß als hitzehärtbares Kunststoffharz pulverförmiges Phenol-Novolakharz mit einem geeigneten Härter verwendet wird.

8. Verfahren nach Anspruch 6 oder 7, dadurch gekennzeichnet, daß der unter Verwendung eines hitzehärtbaren Kunststoffharzes fertig gepreßte, ausgehärtete Verbundkörper anschließend mit Säure zur Ätzung des metallischen Trägers und des katalytisch aktiven Materials behandelt wird.

9. Katalysator für die Verminderung von Stickoxiden aus Abgasen und chemische Luftreinigungsverfahren, hergestellt nach einem Verfahren der vorhergehenden Ansprüche.

6

K-Wert
(m/h)

Beispiel 1 (erfindungsgemäß)

Vergleich (DE 35 26 383 C1)

| | Europäisches Patentamt | EUROPÄISCHER RECHERCHENBERICHT | Nummer der Anmeldung |
|---|---|---|---|
| | | | EP 89 10 1240 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 218 014 (DIDIER ENGINEERING)<br>* Seite 2, Absatz 2; Seite 3, Absätze 2,3,4 *<br>--- | 1-3,9 | B 01 D 53/36<br>B 01 J 35/06 |
| A | EP-A-0 213 271 (DIDIER-WERKE)<br>* Spalte 3, Zeilen 1-57; Spalte 4, Zeilen 1-48 * & DE-C-3 526 383 (Kat. D)<br>--- | 1,4,5,8,9 | |
| A | DE-A-3 610 338 (KRAFTWERK UNION)<br>* Spalte 3, Zeilen 5-45 *<br>--- | 1,9 | |
| A | GB-A-2 026 336 (HITACHI SHIPBUILDING)<br>* Seite 1, Zeilen 59-65; Seite 2, Zeilen 9-12,45-55 *<br>----- | 1 | |
| | | | **RECHERCHIERTE SACHGEBIETE (Int. Cl.4)**<br><br>B 01 D<br>B 01 J |

Der vorliegende Recherchenbericht wurde für alle Patentansprüche erstellt

| Recherchenort | Abschlußdatum der Recherche | Prüfer |
|---|---|---|
| DEN HAAG | 22-06-1989 | KERRES P.M.G. |